# EUROPEAN PATENT APPLICATION

(11) **EP 4 661 048 A1**
(43) Date of publication of application: **10.12.2025**
(21) Application number: 24749545.0
(22) Date of filing: 19.01.2024
(51) Int. Cl.: H01H 71/10, H01H 3/26

(54) **HIGH-VOLTAGE CONNECTION SWITCH AND VEHICLE COMPRISING SAME**

(30) Priority: 31.01.2023 CN 202320240703 U
(71) Applicant: BYD Company Limited, Shenzhen, Guangdong 518118 (CN)
(72) Inventor: XUE, Penghui, Shenzhen, Guangdong 518118 (CN); LIU, Qing, Shenzhen, Guangdong 518118 (CN); ZENG, Wenke, Shenzhen, Guangdong 518118 (CN); DENG, Zexin, Shenzhen, Guangdong 518118 (CN); WU, Shaohua, Shenzhen, Guangdong 518118 (CN)
(74) Representative: Mathys & Squire
(86) International application number: PCT/CN2024/073164
(87) International publication number: WO 2024/160064

(57) **Abstract**

A vehicle includes a high-voltage connection switch. The high-voltage connection switch includes a stationary contact, a movable contact assembly, and a driving mechanism. The driving mechanism is configured to drive the movable contact assembly to move relative to the stationary contact, and the driving mechanism is provided with a self-locking assembly, so that after the driving mechanism drives the movable contact assembly to abut against or separate from the stationary contact, the self-locking assembly locks to maintain a state between the movable contact assembly and the stationary contact.

## Description

### CROSS-REFERENCE TO RELATED APPLICATION

This disclosure claims priority to Chinese Patent Application No. 202320240703.6, filed with the China National Intellectual Property Administration on January 31, 2023 and entitled "HIGH-VOLTAGE CONNECTION SWITCH", which is incorporated herein by reference in its entirety.

### TECHNICAL FIELD

This application relates to the field of new energy vehicle technologies, and in particular, to a high-voltage connection switch and a vehicle including the high-voltage connection switch.

### BACKGROUND

In the related art, some mainstream relay switches are turned on or off by using electromagnetic force, and require a continuous power supply to remain in a closed or open state. However, such switches cannot remain in the current open or closed state after an unexpected power outage.

### SUMMARY

This application is intended to solve at least one of the technical problems existing in the related art. In view of this, this application provides a high-voltage connection switch. A driving mechanism drives a movable contact assembly to come into contact with or separate from a stationary contact, thereby turning on or off the high-voltage connection switch. In addition, a self-locking assembly may be used for a contact or separation state, thereby reducing energy consumption and reducing noise.

A high-voltage connection switch according to an embodiment of a first aspect of this application includes: a stationary contact; a movable contact assembly; and a driving mechanism, wherein the driving mechanism is configured to drive the movable contact assembly to move relative to the stationary contact, and the driving mechanism is provided with a self-locking assembly, so that after the driving mechanism drives the movable contact assembly to abut against or separate from the stationary contact, the self-locking assembly locks to maintain a state between the movable contact assembly and the stationary contact.

According to the high-voltage connection switch in this embodiment of this application, the driving mechanism drives the movable contact assembly to move relative to the stationary contact, to abut against or separate from the stationary contact, thereby turning on or off the high-voltage connection switch. In addition, the driving mechanism is provided with the self-locking assembly, and the driving mechanism is locked by the self-locking assembly, so that the movable contact assembly and the stationary contact may remain in an abutting state or separation state. When power supply to the driving mechanism is stopped, the high-voltage connection switch can remain in the open or closed state, and the high-voltage connection switch does not fail due to a power outage, which can effectively reduce electric energy consumption, ensure safety of external electric appliances, and further can improve a driving range of a new energy vehicle. Moreover, in the high-voltage connection switch, the driving mechanism drives the movable contact assembly to come into contact with the stationary contact, which effectively avoids high-speed impact, and reduces the generation of noise. In addition, a soft contact action causes less damage to the stationary contact and the movable contact assembly, so that longer service life and a better contact interface can be obtained.

According to some embodiments of this application, the driving mechanism includes: a driving member, a self-locking assembly and a transmission rod, wherein the self-locking assembly is in transmission connection with the driving member, the transmission rod is in transmission connection with the self-locking assembly, and driven by the driving member, the transmission rod pushes the movable contact assembly to move relative to the stationary contact.

According to some embodiments of this application, the self-locking assembly includes: a worm gear and a worm, wherein the worm is in transmission connection with the worm gear, the worm is in transmission connection with the transmission rod, the worm gear is capable of actively driving the worm to rotate and the worm is incapable of actively driving the worm gear to rotate, and when the driving mechanism stops driving, the worm prevents the worm gear from rotating, to stop transmission between the driving member and the transmission rod.

According to some embodiments of this application, the stationary contact includes: a first stationary contact and a second stationary contact. The movable contact assembly includes: a first movable contact assembly and a second movable contact assembly, wherein the first movable contact assembly is configured to come into contact with the first stationary contact, and the second movable contact assembly is configured to come into contact with the second stationary contact; and the first movable contact assembly and the second movable contact assembly move synchronously, so that when the first movable contact assembly is in contact with the first stationary contact, the second movable contact assembly is separated from the second stationary contact; or when the second movable contact assembly is in contact with the second stationary contact, the first movable contact assembly is separated from the first stationary contact.

The high-voltage connection switch in this application can implement mutually exclusive turn-on/turn-off of a circuit in which the first movable contact and the first stationary contact are located and a circuit in which the second movable contact and the first stationary contact are located. Based on an existing relay, integration of mutually exclusive circuit states is implemented, and turn-on or turn-off at least two mutually exclusive circuits can be implemented by using a single control signal, which effectively simplifies a control circuit, improves reliability of a control system, reduces failure risk, and reduces costs, so that the high-voltage connection switch has a high integration level.

According to some embodiments of this application, the high-voltage connection switch further includes a pressing plate, where the pressing plate is in transmission connection with the driving mechanism, and the driving mechanism is configured to drive the pressing plate to move, so as to push the movable contact assembly to move toward the stationary contact and come into contact with the stationary contact.

According to some embodiments of this application, the high-voltage connection switch further includes: a pressing plate, wherein the pressing plate is in transmission connection with the driving mechanism, the first movable contact assembly is disposed on one side of the pressing plate that faces a first direction, the second movable contact assembly is disposed on one side of the pressing plate that faces a second direction, and the first direction is different from the second direction; the driving mechanism is configured to drive the pressing plate to move in the first direction, so as to push the first movable contact assembly to move in the first direction and come into contact with the first stationary contact; and the driving mechanism is capable of driving the pressing plate to move in the second direction, so as to push the second movable contact assembly to move in the second direction and come into contact with the second stationary contact.

According to some embodiments of this application, the first movable contact assembly includes: a first movable connection conductor and a first movable contact, wherein a first end of the first movable contact is close to one side of the pressing plate and a second end passes through the first movable connection conductor, and the first movable connection conductor is configured to connect to a first external component; and/or, the second movable contact assembly includes: a second movable connection conductor and a second movable contact, wherein a first end of the second movable contact is close to one side of the pressing plate and a second end passes through the second movable connection conductor, and the second movable connection conductor is configured to connect to a second external component.

According to some embodiments of this application, the first movable contact assembly further includes: a first elastic member, wherein the first elastic member is sleeved on a periphery of the first movable contact and is sandwiched between the pressing plate and the first movable connection conductor; and/or, the second movable contact assembly further includes: a second elastic member, wherein the second elastic member is sleeved on a periphery of the second movable contact and is sandwiched between the pressing plate and the second movable connection conductor.

In the high-voltage connection switch of this application, the first movable contact assembly and the second movable contact assembly are respectively provided with the first elastic member and the second elastic member, so that the first elastic member and the second elastic member provide a uniform mechanical force, which can ensure soft contact and stable contact. An action is performed after power outage, so that contact can still be maintained when the high-voltage connection switch is closed and subjected to vibration, which avoids failure caused by the vibration and achieves a simple and safe structure.

According to some embodiments of this application, there are a plurality of first stationary contacts and a plurality of first movable contact assemblies that are disposed in a one-to-one correspondence, and there are a plurality of second stationary contacts and a plurality of second movable contact assemblies that are disposed in a one-to-one correspondence.

According to the high-voltage connection switch in this application, in one aspect, turn-on or turn-off of a plurality of circuits can be implemented, and the plurality of circuits are not required to have the same load, which implements integration of different loads, and can replace a plurality of relays for operation, thereby effectively reducing costs, reducing weight, and reducing mounting space. In another aspect, on the basis of an existing relay, integration of mutually exclusive circuit states is realized, and turn-on or turn-off of at least two mutually exclusive circuits can be implemented by using a single control signal, which effectively simplifies the control circuit, improve reliability of a control system, and reduce failure risk and costs, so that the high-voltage connection switch has a high integration level.

According to some embodiments of this application, further included is: a mounting base, wherein the driving mechanism, the stationary contact, and the pressing plate are all disposed on the mounting base.

According to some embodiments of this application, further included is: a guide assembly, wherein the guide assembly is disposed on the mounting base, and the guide assembly is in guiding cooperation with the pressing plate, so that the pressing plate moves directionally along the guide assembly.

According to the high-voltage connection switch in this application, the guide assembly is disposed on the mounting base, so that the pressing plate moves directionally along the guide assembly, thereby ensuring movement stability and position accuracy of the pressing plate, and improving service life of the pressing plate.

According to some embodiments of this application, the guide assembly includes: a guide post and a guide sleeve, wherein the guide post is disposed on the mounting base, the guide sleeve is disposed on an end of the guide post, and the pressing plate is capable of being passed through by the guide post and can move directionally along the guide post.

According to some embodiments of this application, further included are: a first limiting assembly and a second limiting assembly, wherein the first limiting assembly and the second limiting assembly are disposed on the mounting base, the pressing plate is disposed between the first limiting assembly and the second limiting assembly to move between the first limiting assembly and the second limiting assembly in a limited manner, and the first limiting assembly and the second limiting assembly may be externally connected to a signal circuit for identifying or determining a contact or separation state between the movable contact assembly and the stationary contact.

According to the high-voltage connection switch in this application, the first limiting assembly and second limiting assembly that are adjustable are disposed on two sides of the mounting base, so that the pressing plate moves between the first limiting assembly and the second limiting assembly in a limited manner, and positions of the first limiting assembly and the second limiting assembly are adjustable and may be adjusted according to an actual product tolerance to achieve precise positioning and limiting.

A vehicle according to an embodiment of a second aspect of this application includes the high-voltage connection switch according to any embodiment of the first aspect of this application.

Additional aspects and advantages of this application are set forth in part in the following description, and in part become apparent from the following description, or may be learned through the practice of this application.

### BRIEF DESCRIPTION OF THE DRAWINGS

The foregoing and/or additional aspects and advantages of this application become apparent and easily understandable from the description of embodiments in conjunction with the following drawings, in which:
FIG. 1 is a schematic diagram of a structure of a high-voltage connection switch according to an embodiment of this application;
FIG. 2 is a schematic diagram of a partial structure of a high-voltage connection switch according to an embodiment of this application;
FIG. 3 is an enlarged view of part A in FIG. 2;
FIG. 4 is a schematic diagram of a structure in which a second movable contact is separated from a second stationary contact according to an embodiment of this application;
FIG. 5 is a schematic diagram of a structure in which a second movable contact is in contact with a second stationary contact according to an embodiment of this application;
FIG. 6 is a schematic diagram of a structure of a self-locking assembly according to an embodiment of this application;
FIG. 7 is a schematic diagram of a structure of a driving member and a reduction gearbox according to an embodiment of this application; and
FIG. 8 is a block diagram of a vehicle according to an embodiment of this application.

Reference numerals:
100: high-voltage connection switch; 1000: vehicle;
11: first stationary contact; 12: second stationary contact; 110: stationary contact; 120: movable contact assembly;
21: first movable contact assembly; 211: first movable connection conductor; 212: first movable contact; 213: first elastic member; 22: second movable contact assembly; 221: second movable connection conductor; 221a: first connecting portion; 221b: second connecting portion; 222: second movable contact; 223: second elastic member;
3: driving mechanism; 31: self-locking assembly; 311: worm gear; 312: worm; 32: driving member; 33: reduction gearbox; 34: transmission rod;
4: pressing plate; 5: first stationary connection conductor; 6: second stationary connection conductor;
7: mounting base; 71: guide assembly; 711: guide post; 712: guide sleeve; 72: first limiting assembly; 73: second limiting assembly; 74: first insulating base; 75: second insulating base;
8: first external component; 9: second external component; 10: signal circuit.

### DESCRIPTION OF EMBODIMENTS

Embodiments of this application are described in detail below. The embodiments described with reference to the accompanying drawings are exemplary.

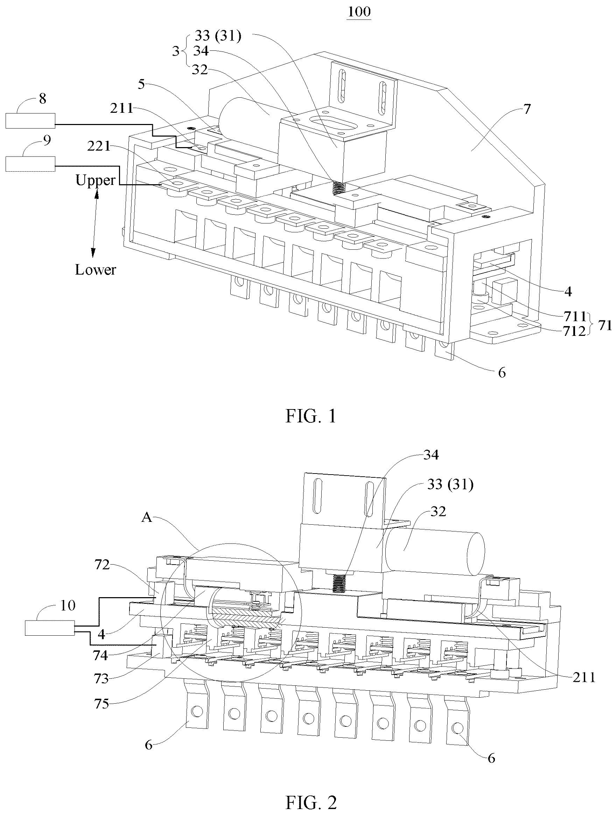

A high-voltage connection switch 100 according to an embodiment of a first aspect of this application is described below with reference to FIG. 1 to FIG. 7.

As shown in FIG. 1 to FIG. 3, a high-voltage connection switch 100 includes a stationary contact 110, a movable contact assembly 120, and a driving mechanism 3.

The driving mechanism 3 is configured to drive the movable contact assembly 120 to move relative to the stationary contact 110. When the driving mechanism 3 drives the movable contact assembly 120 to move relative to the stationary contact 110 and abut against the stationary contact 110, a circuit is turned on by the stationary contact 110 and the movable contact assembly 120. In this case, the high-voltage connection switch 100 is in a closed state. When the driving mechanism 3 drives the movable contact assembly 120 to separate from the stationary contact 110, the circuit is turned off due to the stationary contact 110 and the movable contact assembly 120. In this case, the high-voltage connection switch 100 is in an open state.

The driving mechanism 3 is provided with a self-locking assembly 31, so that after the driving mechanism 3 drives the movable contact assembly 120 to abut against or separate from the stationary contact 110, the self-locking assembly 31 locks to maintain a state between the movable contact assembly 120 and the stationary contact 110. In this way, after the driving mechanism 3 drives the movable contact assembly 120 to abut against or separate from the stationary contact 110, the driving mechanism 3 is locked by the self-locking assembly 31, so that the movable contact assembly 120 and the stationary contact 110 may remain in an abutting state or separation state. In this design, when power supply to the driving mechanism 3 is stopped, the high-voltage connection switch 100 may remain in the open or closed state, and the high-voltage connection switch 100 does not fail due to power outage, thereby effectively reducing energy consumption and ensuring safety of external electric appliances.

In the related art, an electromagnetic relay implements turn-on or turn-off of a circuit by using electromagnetic force, and further requires a continuous power supply to remain the circuit in a closed or open state, which requires more electric energy consumption. In contrast, the high-voltage connection switch 100 in this application may still remain in the open or closed state after power outage, which reduces electric energy consumption of a new energy vehicle, thereby improving a driving range of the new energy vehicle. Moreover, in the high-voltage connection switch 100, the driving mechanism 3 drives the movable contact assembly 120 to come into contact with the stationary contact 110, which effectively avoids high-speed impact, reduces the generation of noise. In addition, a soft contact action causes less damage to the stationary contact 110 and the movable contact assembly 120, so that longer service life and a better contact interface can be obtained, effectively solving the problem that contact parts in the electromagnetic relay needs to withstand significant impact during switching operations and produce "click" noise at the same time.

In this way, the driving mechanism 3 drives the movable contact assembly 120 to move relative to the stationary contact 110 and abut against or separate from the stationary contact 110, thereby implementing turn-on or turn-off of the high-voltage connection switch 100. In addition, the driving mechanism 3 is provided with the self-locking assembly 31, and the driving mechanism 3 is locked by the self-locking assembly 31, so that the movable contact assembly 120 and the stationary contact 110 may remain in the abutting state or the separation state, and when power supply to the driving mechanism 3 is stopped, the high-voltage connection switch 100 can remain in the open or closed state, and the high-voltage connection switch 100 does not fail due to power failure, which can effectively reduce electric energy consumption, ensuring safety of external electric appliances, and further can improve the driving range of the new energy vehicle. Moreover, in the high-voltage connection switch 100, the driving mechanism 3 drives the movable contact assembly 120 to come into contact with the stationary contact 110, which effectively avoids high-speed impact, reduces the generation of noise. In addition, a soft contact action causes less damage to the stationary contact 110 and the movable contact assembly 120, so that longer service life and a better contact interface can be obtained.

In some embodiments, the driving mechanism 3 includes a driving member 32, a self-locking assembly 31, and a transmission rod 34. The self-locking assembly 31 is in transmission connection with the driving member 32. The transmission rod 34 is in transmission connection with the self-locking assembly 31. Driven by the driving member 32, the transmission rod 34 pushes the movable contact assembly 120 to move relative to the stationary contact 110.

That is, the driving member 32 is in indirect transmission connection with the transmission rod 34. The driving member 32 can drive the transmission rod 34 to move, so that the transmission rod 34 pushes the movable contact assembly 120 to move relative to the stationary contact 110, to turn on or off the high-voltage connection switch 100. In addition, the self-locking assembly 31 is disposed between the driving member 32 and the transmission rod 34. The self-locking assembly 31 is in transmission connection with the driving member 32 and is in transmission connection with the transmission rod 34. That is, the self-locking assembly 31 is connected between the driving member 32 and the transmission rod 34. When power supply to the driving member 32 is stopped, the self-locking assembly 31 self-locks to lock rotation between the driving member 32 and the transmission rod 34 and maintain a current connection state by a mechanical force, which does not consume electric power, can effectively reduce energy consumption, and can be disconnected without arcing generation.

Therefore, a driving force of the driving member 32 can be converted into rotation of the transmission rod 34 at a relatively low speed, thereby implementing low-speed output of the driving member 32, implementing power amplification, and reducing energy consumption during operation.

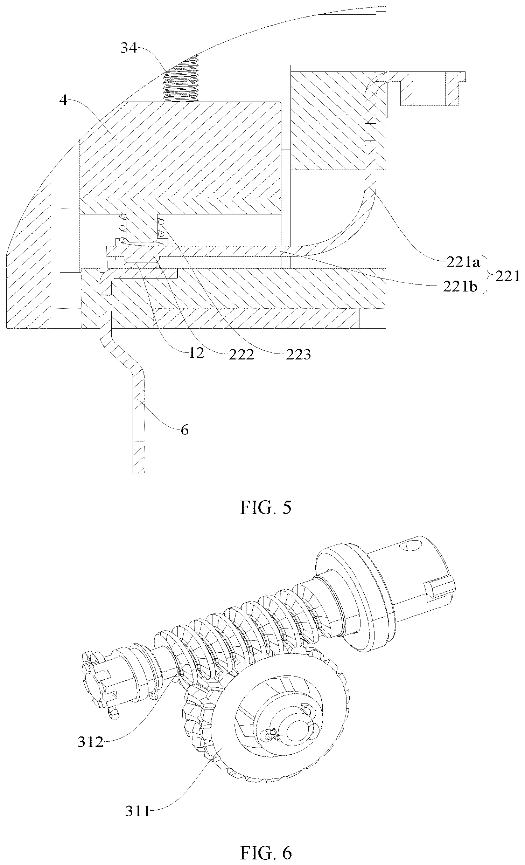

With reference to FIG. 6, the self-locking assembly 31 may include a worm gear 311 and a worm 312. The worm gear 311 is in transmission connection with the worm 312. The worm gear 311 is in transmission connection with the driving member 32. The worm 312 is in transmission connection with the transmission rod 34. The worm gear 311 is capable of actively driving the worm 312 to rotate, and the worm 312 is incapable of actively driving the worm gear 311 to rotate. When the driving member 32 stops driving, the worm 312 prevents the worm gear 311 from rotating, to stop transmission between the driving member 32 and the transmission rod 34.

It will be understood that a structure having the worm gear and the worm has a self-locking capability, and may implement reverse self-locking. That is, only the worm gear 311 is capable of actively driving the worm 312 to rotate, and the worm 312 is incapable of actively driving the worm gear 311 to rotate, so as to implement a reverse self-locking function of the worm 312 and the worm gear 311.

In this way, when an output shaft of the driving member 32 starts to rotate, the worm gear 311 and the driving member 32 rotationally cooperates with each other, and then the worm gear 311 is rotationally engaged with the worm 312. In this case, the driving member 32 transmits output power to the transmission rod 34 through the worm gear 311 and the worm 312, so that the transmission rod 34 pushes the movable contact assembly 120 to move relative to the stationary contact 110. Because the worm 312 and the worm gear 311 have the self-locking function, when power supply to the driving member 32 is stopped, the worm 312 and the worm gear 311 no longer rotate, and the worm 312 prevents the worm gear 311 from rotating reversely, so that self-locking of the worm 312 can be implemented, thereby preventing rotation between the driving member 32 and the transmission rod 34, ensuring that the transmission rod 34 does not rotate unintentionally, and maintaining the abutting state or separation state between the movable contact assembly 120 and the stationary contact 110.

For example, the driving member 32 may specifically be a motor. An output shaft of the motor is in transmission connection with the worm gear 311, and the worm 312 is in transmission connection with the transmission rod 34. When the motor is powered on, reciprocating movement of the transmission rod 34 may be implemented by forward and reverse rotation of the motor, and then the movable contact assembly 120 may move relative to the stationary contact 110 and abut against to separate from the same. After the motor is powered off, the worm 312 and the worm gear 311 are self-locked, so that the transmission rod 34 is locked by the worm 312, to ensure that the transmission rod 34 no longer rotates, thereby remaining maintaining the contact or separation state between the movable contact assembly 120 and the stationary contact 110.

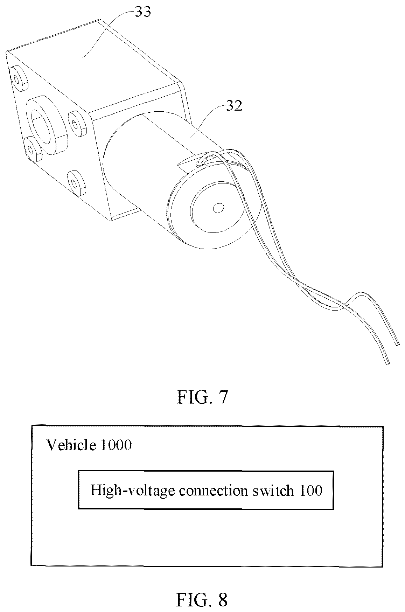

With reference to FIG. 7, the driving mechanism 3 may further include a reduction gearbox 33. The self-locking assembly 31 is disposed in the reduction gearbox 33. The driving member 32 may be disposed in the reduction gearbox 33 or disposed on one side of the reduction gearbox 33.

In addition, the self-locking assembly 31 further includes a reduction gear. The reduction gear is in transmission connection with the driving member 32, the worm gear 311 is in transmission connection with the reduction gear, and the worm gear 311 is in transmission connection with the worm 312, to stop transmission between the driving member 32 and the transmission rod 34.

Certainly, the driving member 32 may specifically be a cylinder, an electromagnet, or the like. The transmission rod 34 may specifically implement a rotational output of a screw, a linear output of a screw, or the like, which is not limited to contents described in the foregoing embodiments of this application. Any modification or equivalent replacement made to the technical solutions of this application without departing from the scope of the technical solutions of this application shall fall within the protection scope of this application.

In some embodiments, the stationary contact 110 includes a first stationary contact 11 and a second stationary contact 12. The movable contact assembly 120 includes a first movable contact assembly 21 and a second movable contact assembly 22.

The first movable contact assembly 21 is configured to come into contact with the first stationary contact 11. The second movable contact assembly 22 is configured to come into contact with the second stationary contact 12. The first movable contact assembly 21 and the second movable contact assembly 22 may move synchronously, so that when the first movable contact assembly 21 is in contact with the first stationary contact 11, the second movable contact assembly 22 is separated from the second stationary contact 12; alternatively, when the second movable contact assembly 22 is in contact with the second stationary contact 12, the first movable contact assembly 21 is separated from the first stationary contact 11.

That is, through synchronous movement of the first movable contact assembly 21 and the second movable contact assembly 22, the following two states of the high-voltage connection switch 100 may be implemented: When the first movable contact assembly 21 moves to come into contact with the first stationary contact 11, a first circuit connected to the first movable contact assembly 21 and the first stationary contact 11 may be turned on, and meanwhile, the second movable contact assembly 22 is separated from the second stationary contact 12, and a second circuit connected to the second movable contact assembly 22 and the second stationary contact 12 may be turned off; alternatively, when the second movable contact assembly 22 moves to come into contact with the second stationary contact 12, the second circuit connected to the second movable contact assembly 22 and the second stationary contact 12 may be turned on, and meanwhile, the first movable contact assembly 21 is separated from the first stationary contact 11, and the first circuit is turned off. That is, when the first circuit is turned on, the second circuit is in an open state; alternatively, when the first circuit is turned off, the second circuit is in a closed state. This implements a mutually exclusive design of the first circuit and the second circuit.

In this way, for any circuit current in the first circuit or the second circuit, two movable contacts and two stationary contacts that are used by a conventional relay to turn on one circuit are directly simplified into one movable contact and one stationary contact, thereby reducing manufacturing and production process difficulties, and further reducing weight and costs.

Furthermore, the high-voltage connection switch 100 further includes a pressing plate 4. The pressing plate 4 is in transmission connection with the driving mechanism 3. The first movable contact assembly 11 is disposed on one side of the pressing plate 4 that faces a first direction. The second movable contact assembly 22 is disposed on one side of the pressing plate 4 that faces a second direction. The first direction is different from the second direction.

The driving mechanism 3 may drive the pressing plate 4 to move in the first direction, to push the first movable contact assembly 21 to move in the first direction and come into contact with the first stationary contact 11. The driving mechanism 3 may drive the pressing plate 4 to move in the second direction, to push the second movable contact assembly 22 to move in the second direction and come into contact with the second stationary contact 12.

Specifically, when the pressing plate 4 moves in the first direction, the pressing plate 4 pushes the first movable contact assembly 21 to move in the first direction and come into contact with the first stationary contact 11. In this case, the second movable contact assembly 22 is no longer pressed by the pressing plate 4, that is, the pressing plate 4 and the second movable contact assembly 22 are in the separation state. Similarly, when the pressing plate 4 moves in the second direction, the pressing plate 4 pushes the second movable contact assembly 22 to move in the second direction and come into contact with the second stationary contact 12. In this case, the first movable contact assembly 21 is no longer pressed by the pressing plate 4, that is, the pressing plate 4 is separated from the first movable contact assembly 21.

Therefore, the driving mechanism 3 drives the pressing plate 4 to reciprocate between the first direction and the second direction, so that the first movable contact assembly 21 and the second movable contact assembly 22 move synchronously, thereby implementing mutually exclusive contact/separation of the pressing plate 4 and each of the first movable contact assembly 21 and the second movable contact assembly 22. That is, when the pressing plate 4 pushes the first movable contact assembly 21 to come into contact with the first stationary contact 11, the second movable contact 12 is separated from the second movable contact assembly 22; alternatively, when the pressing plate 4 pushes the second movable contact assembly 22 to come into contact with the second movable contact, the first stationary contact 11 is separated from the first movable contact assembly 21.

It should be noted that the first direction is different from the second direction, indicating that the first direction and the second direction are opposite. For example, in the embodiments of this application, as shown in FIG. 1, the first direction is an upward direction, and the second direction is a downward direction.

Still furthermore, as long as the first direction and the second direction are not the same direction, and mutually exclusive states between the first movable contact assembly 21 and the second movable contact assembly 22 are satisfied.

Furthermore, the first movable contact assembly 21 includes a first movable connection conductor 211 and a first movable contact 212, where a first end of the first movable contact 212 is close to one side of the pressing plate 4 and a second end passes through the first movable connection conductor 211, and the first movable connection conductor 211 is configured to connect to a first external component 8; and/or, the second movable contact assembly 22 includes a second movable connection conductor 221 and a second movable contact 222, where a first end of the second movable contact 222 is close to one side of the pressing plate 4 and a second end passes through the second movable connection conductor 221, and the second movable connection conductor 221 is configured to connect to a second external component 9.

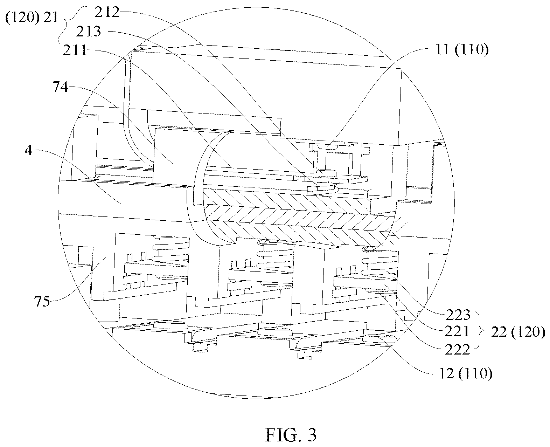

That is, with reference to FIG. 3, the first end of the first movable contact 212 is disposed on one side facing the pressing plate 4, and the second end passes through the first movable connection conductor 211. The first end of the first movable contact 212 is pushed by the pressing plate 4 to slowly move upward. In this case, the first movable contact 212 may drive one end of the first movable connection conductor 211 to move upward together, so that the second end of the first movable contact 212 is in contact with the first stationary contact 11, and the second movable connection conductor 221 may drive the second movable contact 12 to restore to an initial position. With reference to FIG. 5, when the pressing plate 4 moves downward to push the first end of the second movable contact 222, the second end of the second movable contact 222 is in contact with the second stationary contact 12. In this case, the first movable connection conductor 211 may drive the first movable contact 212 to restore to an initial position, so that the first movable contact 212 is separated from the first stationary contact 11, maintaining adequate electrical clearance and creepage distance.

The first ends of the first movable connection conductor 211 and the second movable connection conductor 221 are both fastened, and the second ends are both movably disposed. That is, the second ends are designed to be suspended, to implement soft connections.

In an embodiment of this application, the first movable connection conductor 211 and the second movable connection conductor 221 are flexible connection copper bars. The copper bar has a large heat dissipation area, so that the high-voltage connection switch 100 can achieve a higher heat dissipation efficiency, and regulate temperature more effectively, thereby further raising power or reducing the use of conductor materials.

In addition, the first movable contact assembly 21 further includes a first elastic member 213, where the first elastic member 213 is sleeved on a periphery of the first movable contact 212 and is sandwiched between the pressing plate 4 and the first movable connection conductor 211; and/or, the second movable contact assembly 22 further includes a second elastic member 223, where the second elastic member 223 is sleeved on a periphery of the second movable contact 222 and is sandwiched between the pressing plate 4 and the second movable connection conductor 221.

Specifically, the first elastic member 213 is fastened on one side of the first movable connection conductor 211 that is close to the pressing plate 4, and the first elastic member 213 is sleeved on the periphery of the first movable contact 212.

For example, the first elastic member 213 is a spring member.

Driven by the driving mechanism 3, the pressing plate 4 in FIG. 1 and FIG. 2 moves in the first direction (the first direction in this embodiment is upward), so that the first movable contact 212 slowly approaches the first stationary contact 11, to implement full contact between the first stationary contact 11 and the first movable contact 212. Then, the pressing plate 4 continues to move in the first direction, so that the first elastic member 213 is compressed, and an adequate positive force is provided for contact between the first stationary contact 11 and the first movable contact 212, to ensure overcurrent safety. In this case, the circuit is in a closed state. Then, the driving mechanism 3 is powered off and stopped, and locking is implemented by the self-locking assembly 31, so that the pressing plate 4 no longer moves. In this way, the first movable contact 212 and the first stationary contact 11 still remain in a contact state after power outage. When the circuit needs to be turned off, a reverse voltage is supplied to the driving mechanism 3, to drive the pressing plate 4 to move reversely, that is, more in the second direction (the second direction in this embodiment is downward), and the first elastic member 213 is released. As the pressing plate 4 continues to move downward, the first movable contact 212 is separated from the first stationary contact 11, and the circuit is turned off. After the pressing plate continues to move to a specified position, the driving mechanism 3 is powered off, the self-locking assembly 31 locks, and the circuit is in an open state and remains in the open state. Similarly, the second movable contact assembly 22 may further include a second elastic member 223 whose working principle is the same as that of the first elastic member 213, which is not repeated herein.

In this way, the first movable contact assembly 21 and the second movable contact assembly 22 are respectively provided with the first elastic member 213 and the second elastic member 223, so that the first elastic member 213 and the second elastic member 223 provide a uniform mechanical force, which can ensure soft contact and stable contact. When an action is performed after power outage, contact can still be maintained while the high-voltage connection switch 100 is closed and subjected to vibration, which avoids a failure caused by the vibration and achieves a simple and safe structure. Compared with the relay in which power-on or power-off is completed instantly and contact parts need to withstand significant and produce "click" noise, the high-voltage connection switch 100 of this application can reduce noise.

In addition, the first movable connection conductor 211 and the second movable connection conductor 221 each include a first connecting portion 221a and a second connecting portion 221b, and the second connecting portion 221b is bent in a horizontal direction relative to the first connecting portion 221a. One end of the first connecting portion 221a that is away from the second connecting portion 221b is configured to connect to an external component, and a movable contact is disposed at one end of the second connecting portion 221b that is away from the first connecting portion 221a. That is, the first movable connection conductor 211 is used as an example, one end of the first connecting portion 221a is fastened to form a fastened mounting point for connecting a first external component 8. The second connecting portion 221b is bent in the horizontal direction relative to the first connecting portion 221a, so that the second connecting portion 221b has a specific rigidity, which is beneficial to the pressing plate 4 pushing the second connecting portion 221b to move.

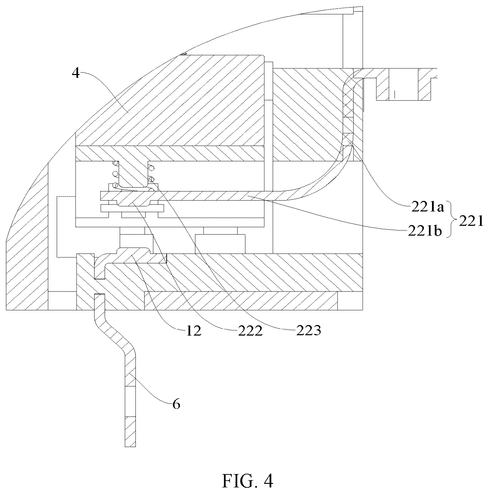

As shown in FIG. 4 and FIG. 5, the first connecting portion 221a is vertically disposed, and the second connecting portion 221b is bent in the horizontal direction relative to the first connecting portion 221a, so that the second connecting portion 221b can move to a certain extent. Certainly, the second connecting portion 221b may be bent in the horizontal direction for many times, so that the second connecting portion 221b has adequate rigidity, thereby ensuring that the second connecting portion 221b is not deformed due to being pushed by the pressing plate 4.

Furthermore, there may be a plurality of first stationary contacts 11 and a plurality of first movable contact assemblies 21 that are disposed in a one-to-one correspondence. There may be a plurality of second stationary contacts 12 and a plurality of second movable contact assemblies 22 that are disposed in a one-to-one correspondence.

In the embodiments of this application, the high-voltage connection switch 100 is designed with two first stationary contacts 11 and two first movable contact assemblies 21, that is, two first circuits, as well as eight second stationary contacts 12 and eight second movable contact assemblies 22, that is, eight second circuits, so that turn-on or turn-off of ten circuit loops can be controlled.

In this way, according to the high-voltage connection switch 100 in this application, in one aspect, turn-on or turn-off of a plurality of circuits can be implemented, and the plurality of circuits are not required to have a same load, which implements integration of different loads, and can replace a plurality of relays for operation, thereby effectively reducing costs, reducing weight, and reducing mounting space. In another aspect, mutually exclusive turn-on/turn-off of a plurality of first circuits and a plurality of second circuits can be implemented, on the basis of an existing relay, integration of mutually exclusive circuit states is implemented, and turn-on or turn-off of the plurality of mutually exclusive circuits can be implemented by using a single control signal, which effectively simplifies a control circuit, improve reliability of a control system, reduce failure risk, and reduce costs, so that the high-voltage connection switch 100 has a high integration level.

With reference to FIG. 1 and FIG. 2, the high-voltage connection switch 100 further includes a first stationary connection conductor 5 and a second stationary connection conductor 6. A first stationary contact 11 is disposed on the first stationary connection conductor 5 that is combined with the first stationary contact 11 to form a first stationary connection assembly. A second stationary contact 12 is disposed on the second stationary connection conductor 6 that is combined with the second stationary contact 12 to form a first stationary connection assembly. One end of the first stationary connection assembly that is away from the first stationary contact 11 and one end of the second stationary connection assembly that is away from the second stationary contact 12 are separately configured to connect to an external component.

In an embodiment of this application, the first stationary connection assembly and the second stationary connection assembly may be rigid connection copper bars. One end of the rigid connection copper bar is provided with the first stationary contact 11/the second stationary contact 12, and the other end is configured to connect to an external component. In addition, the copper bar has a larger heat dissipation area, so that the high-voltage connection switch 100 can achieve a higher heat dissipation efficiency, and regulate temperature more effectively, thereby further raising power or reducing the use of conductor materials.

Certainly, the first stationary connection conductor 5 and the second stationary connection conductor 6 are not limited to the foregoing hard connection copper bars, and the first movable connection conductor 211 and the second movable connection conductor 221 are not limited to the foregoing flexible connection copper bars. They may alternatively be connection conductors such as conductors, which are not listed here for simplicity. It will be understood that other metal conductors shall fall within the protection scope of this application.

In addition, as shown in FIG. 1 and FIG. 2, the high-voltage connection switch 100 further includes a mounting base 7. The driving mechanism 3, the stationary contact 110, and the pressing plate 4 are all disposed on the mounting base 7.

With reference to the embodiments of this application, the first stationary connection conductor 5 and the second stationary connection conductor 6 are disposed on the mounting base 7. One end of the first movable contact assembly 11 is fastened on the mounting base 7, and the other end is disposed between the first stationary connection assembly and the pressing plate 4. One end of the second movable contact assembly 22 is fastened on the mounting base 7, and the other end is disposed between the second stationary connection assembly and the pressing plate 4. The pressing plate 4 may push the first movable contact assembly 21 and the second movable contact assembly 22 to move up and down relative to the mounting base 7. In this way, the driving mechanism 3 is mounted on the mounting base 7, and the first stationary connection conductor 5 and the second stationary connection conductor 6 are respectively mounted on upper and lower sides of the mounting base 7. In addition, a first end of the first movable connection conductor 211 in the first movable contact assembly 11 is fastened on the mounting base 7, and a second end is located between the first stationary connection conductor 5 and the pressing plate 4. Similarly, a first end of the second movable connection conductor 221 in the second movable contact assembly 22 is fastened on the mounting base 7, and a second end is located between the second stationary connection conductor 6 and the pressing plate 4. The pressing plate 4 may push the first movable contact assembly 21 and the second movable contact assembly 22 to move relative to the mounting base 7 in the first direction and the second direction, thereby implementing mutually exclusive turn-on/turn-off of the first circuit and the second circuit.

In addition, the pressing plate 4 is provided with a first rotating plate and a second rotating plate, where one end of the first rotating plate is rotatably connected to the mounting base 7, the other end of the first rotating plate is disposed on one side of the pressing plate 4 that faces the first direction, the other end is provided with a first guide portion, and when a driving plate 32 drives the pressing plate 4 to move in the first direction, the first rotating plate rotates relative to the mounting base 7, and the first guide portion of the first rotating plate is in guiding cooperation with the first elastic member 213; and/or, one end of the second rotating plate is rotatably connected to the mounting base 7, the other end of the second rotating plate is disposed on one side of the pressing plate 4 that faces the second direction, the other end is provided with a second guide portion, and when the driving plate 32 drives the pressing plate 4 to move in the second direction, the second rotating plate rotates relative to the mounting base 7, and the second guide portion of the second rotating plate is in guiding cooperation with the second elastic member 223.

In this way, rotation tracks of the first rotating plate and the second rotating plate are fixed. The pressing plate 4 pushes the first rotating plate in the first direction, so that the first guide portion may be well guided to be in guiding cooperation with the first elastic member 213, and therefore, the first movable connection conductor 211 may move accurately to abut against the first stationary contact 11. Similarly, the sample principle is also applied to the second rotating plate.

In addition, the high-voltage connection switch 100 further includes a guide assembly 71. The guide assembly 71 is disposed on the mounting base 7. The guide assembly 71 is in guiding cooperation with the pressing plate 4, so that the pressing plate 4 moves directionally along the guide assembly 71. In this way, the guide assembly 71 is disposed on the mounting base 7, so that the pressing plate 4 moves up and down along the guide assembly 71, ensuring movement stability and precision of the pressing plate 4, and prolonging service life of the pressing plate 4.

In some embodiments, the guide assembly 71 includes a guide post 711 and a guide sleeve 712, where the guide post 711 is disposed on the mounting base 7, the guide sleeve 712 is disposed at an end of the guide post 711, and the pressing plate 4 is capable of being passed through by the guide post 711, and is capable of moving directionally along the guide post 711. In this way, the guide post 711 is disposed on the mounting base 7, the guide sleeve 712 is disposed at the bottom of the guide post 711, the pressing plate 4 is passed through by the guide post 711, and driven by the driving mechanism 3, the pressing plate 4 moves directionally along the guide post 711, which is simple in structure, and improves movement stability. The guide post 711 may be a metal guide post 711, which can prolong service life.

Certainly, the guide assembly 71 may alternatively be replaced or expanded by a positioning and guiding apparatus such as a positioning post or a guide (or a slide) rail, which falls within the protection scope of this application.

Moreover, the high-voltage connection switch 100 further includes a first limiting assembly 72 and a second limiting assembly 73, where the first limiting assembly 72 and the second limiting assembly 73 are adjustably disposed on the mounting base 7, and the pressing plate 4 is disposed between the first limiting assembly 72 and the second limiting assembly 73, to move between the first limiting assembly 72 and the second limiting assembly 73 in a limited manner. In this way, the first limiting assembly 72 and second limiting assembly 73 that are adjustable are disposed on upper and lower sides of the mounting base 7, so that the pressing plate 4 moves between the first limiting assembly 72 and the second limiting assembly 73 in a limited manner. In addition, positions of the first limiting assembly 72 and the second limiting assembly 73 are adjustable, so that the positions may be adjusted according to an actual product tolerance to achieve precise positioning and limiting.

For example, the first limiting assembly 72 may include a first limiting block and a first position sensor. The first position sensor is mounted on the first limiting block. The second limiting assembly 73 may include a second limiting block and a second position sensor. The second position sensor is mounted on the second limiting block. As shown in FIG. 2, when the pressing plate 4 moves in the first direction and comes into contact with the first limiting block or moves to a specified distance, the first position sensor may control the pressing plate 4 to continue moving by detecting a position of the pressing plate 4. Similarly, when the pressing plate 4 moves in the second direction and comes into contact with the second limiting block or moves to a specified distance, the second position sensor may control the pressing plate 4 to continue moving by detecting the position of the pressing plate 4, so that movement of the pressing plate 4 can be limited, and service life of the pressing plate 4 can be improved.

The first limiting assembly 72 and the second limiting assembly 73 may be externally connected to a signal circuit 10 for identifying contact and separation states between the stationary contact 110 and the movable contact assembly 120.

That is, the first position sensor and the second position sensor mentioned above may be externally connected to the signal circuit 10 for identifying the contact and separation states between the movable contact assembly 21 and the stationary contact 110, thereby accurately controlling an on-off operation of the driving mechanism 3.

Certainly, the first limiting assembly 72 and the second limiting assembly 73 include but are not limited to limit blocks. An apparatus or a structure such as a limiting switch, a limiting column, a limiting sensor, and a limiting telescoping device shall all fall within the protection scope of this application.

In addition, as shown in FIG. 2, the pressing plate 4 is provided with a first insulating base 74 and a second insulating base 75. The first insulating base 74 is disposed on the pressing plate 4 and surrounds the first movable contact assembly 21. The second insulating base 75 is disposed under the pressing plate 4 and surrounds the second movable contact assembly 22. In this way, in this embodiment, because the pressing plate 4 is a metal pressing plate, the first insulating base 74 is disposed on the pressing plate 4 and surrounds the first movable contact assembly 21 and the first stationary contact 11, to be insulated and isolated from the pressing plate 4, and the second insulating base 75 is disposed under the pressing plate 4 to surround the second movable contact 222 and the second stationary contact 12, to be also insulated and isolated from the pressing plate 4.

A vehicle 1000 according to an embodiment of a second aspect of this application, as shown in FIG. 8, includes the high-voltage connection switch 100.

Therefore, the driving mechanism 3 drives the movable contact assembly to move relative to the stationary contact 110 and abut against or separate from the stationary contact 110, so that turn-on or turn-off the high-voltage connection switch 100 can be implemented; in addition, the driving mechanism 3 is locked by using the self-locking assembly 31, so that the movable contact assembly 120 and the stationary contact 110 may remain in the abutting state or separation state, and the high-voltage connection switch 100 can remain in the open or closed state when power supply to the driving mechanism 3 is stopped, and the high-voltage connection switch 100 does not fail due to power outage, which may effectively reduce electric energy consumption and ensure electricity safety. Moreover, in the high-voltage connection switch 100, the driving mechanism 3 drives the movable contact assembly 120 to come into contact with the stationary contact 110, which effectively avoids high-speed impact, reduces the generation of noise. In addition, a soft contact action causes less damage to the stationary contact 110 and the movable contact assembly, so that longer service life and a better contact interface can be obtained. In addition, turn-on or turn-off of a plurality of circuits can be implemented, and the plurality of circuits are not required to have a same load, which implements integration of different loads, and can replace a plurality of relays for operation, thereby effectively reducing costs, reducing weight, and reducing mounting space. On the other hand, mutually exclusive turn-on/turn-off of the first circuit loop and the second circuit loop can be implemented, and on the basis of an existing relay, integration of mutually exclusive circuit states is implemented. In addition, turn-on or turn-off of the plurality of mutually exclusive circuits can be implemented by using a single control signal, which effectively simplifies a control circuit, improves reliability of a control system, reduces failure risk, and reduces costs, so that the high-voltage connection switch 100 has a high integration level.

The high-voltage connection switch 100 in this application is a switch that controls connection or disconnection of a plurality of high-voltage loops. Each loop is connected in a single-contact manner, which is an electrical connection structure that does not require continuous work for connection or disconnection.

In the descriptions of this application, it will be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are orientations or positional relationships as shown in the drawings, and are only for the purpose of facilitating and simplifying the descriptions of this application instead of indicating or implying that apparatuses or elements indicated must have particular orientations, and be constructed and operated in the particular orientations, so that these terms are not construed as limiting this application.

In the description of this specification, reference to descriptions of the terms "an embodiment", "some embodiments", "exemplary embodiments", "examples", "specific examples", or "some examples", or the like means specific features, structures, materials, or features described with reference to the embodiments or examples are included in at least one embodiment or example of this application. In this specification, the schematic representations of the foregoing terms are not necessarily aimed at the same embodiment or example.

Although the embodiments of this application have been shown and described, those of ordinary skill in the art can understand that many changes, modifications, substitutions and variations can be made to these embodiments without departing from the principles and purposes of this application, and the scope of this application is defined by the claims and their equivalents.

## Claims

1. A high-voltage connection switch (100), comprising:
a stationary contact (110);
a movable contact assembly (120); and
a driving mechanism (3), wherein the driving mechanism (3) is configured to drive the movable contact assembly (120) to move relative to the stationary contact (110), and the driving mechanism (3) is provided with a self-locking assembly (31), so that after the driving mechanism (3) drives the movable contact assembly (120) to abut against or separate from the stationary contact (110), the self-locking assembly (31) locks to maintain a state between the movable contact assembly (120) and the stationary contact (110).

2. The high-voltage connection switch (100) according to claim 1, wherein the driving mechanism (3) further comprises:
a driving member (32), wherein the driving member (32) is in transmission connection with the self-locking assembly (31); and
a transmission rod (34), wherein the transmission rod (34) is in transmission connection with the self-locking assembly (31), and driven by the driving member (32), the transmission rod (34) pushes the movable contact assembly (120) to move relative to the stationary contact (110).

3. The high-voltage connection switch (100) according to claim 2, wherein the self-locking assembly (31) comprises:
a worm gear (311), wherein the worm gear (311) is in transmission connection with the driving member (32); and
a worm (312), wherein the worm (312) is in transmission connection with the worm gear (311), the worm (312) is in transmission connection with the transmission rod (34), the worm gear (311) is capable of actively driving the worm (312) to rotate and the worm (312) is incapable of actively driving the worm gear (311) to rotate, and when the driving mechanism (3) stops driving, the worm (312) prevents the worm gear (311) from rotating to stop transmission between the driving member (32) and the transmission rod (34).

4. The high-voltage connection switch (100) according to any one of claims 1 to 3, wherein the stationary contact (110) comprises a first stationary contact (11) and a second stationary contact (12);
the movable contact assembly (120) comprises a first movable contact assembly (21) and a second movable contact assembly (22), the first movable contact assembly (21) is configured to come into contact with the first stationary contact (11), and the second movable contact assembly (22) is configured to come into contact with the second stationary contact (12); and
the first movable contact assembly (21) and the second movable contact assembly (22) move synchronously, so that the second movable contact assembly (22) is separated from the second stationary contact (12) when the first movable contact assembly (21) is in contact with the first stationary contact (11), or so that the first movable contact assembly (21) is separated from the first stationary contact (11) when the second movable contact assembly (22) is in contact with the second stationary contact (12).

5. The high-voltage connection switch (100) according to claim 1, further comprising a pressing plate (4), wherein the pressing plate (4) is in transmission connection with the driving mechanism (3), and the driving mechanism (3) is configured to drive the pressing plate (4) to move, so as to push the movable contact assembly (120) to move toward the stationary contact (110) and come into contact with the stationary contact (110).

6. The high-voltage connection switch (100) according to claim 4, further comprising a pressing plate (4), wherein the pressing plate (4) is in transmission connection with the driving mechanism (3), the first movable contact assembly (11) is disposed on one side of the pressing plate (4) that faces a first direction, the second movable contact assembly (22) is disposed on one side of the pressing plate (4) that faces a second direction, and the first direction is different from the second direction; and
the driving mechanism (3) is configured to drive the pressing plate (4) to move in the first direction, so as to push the first movable contact assembly (21) to move in the first direction and come into contact with the first stationary contact (11); or
the driving mechanism (3) is configured to drive the pressing plate (4) to move in the second direction, so as to push the second movable contact assembly (22) to move in the second direction and come into contact with the second stationary contact (12).

7. The high-voltage connection switch (100) according to claim 6, wherein the first movable contact assembly (21) comprises a first movable connection conductor (211) and a first movable contact (212), a first end of the first movable contact (212) is close to one side of the pressing plate (4), a second end of the first movable contact (212) passes through the first movable connection conductor (211), and the first movable connection conductor (211) is configured to connect to a first external component (8); and/or
the second movable contact assembly (22) comprises a second movable connection conductor (221) and a second movable contact (222), a first end of the second movable contact (222) is close to one side of the pressing plate (4), a second end of the second movable contact (222) passes through the second movable connection conductor (221), and the second movable connection conductor (221) is configured to connect to a second external component (9).

8. The high-voltage connection switch (100) according to claim 7, wherein the first movable contact assembly (21) further comprises a first elastic member (213), and the first elastic member (213) is sleeved on a periphery of the first movable contact (212) and is sandwiched between the pressing plate (4) and the first movable connection conductor (211); and/or,
the second movable contact assembly (22) further comprises a second elastic member (223), and the second elastic member (223) is sleeved on a periphery of the second movable contact (222) and is sandwiched between the pressing plate (4) and the second movable connection conductor (221).

9. The high-voltage connection switch (100) according to any one of claims 4 and 5 as well as 7 and 8, wherein there are a plurality of first stationary contacts (11) and a plurality of first movable contact assemblies (21) that are disposed in a one-to-one correspondence, and there are a plurality of second stationary contacts (12) and a plurality of second movable contact assemblies (22) that are disposed in a one-to-one correspondence.

10. The high-voltage connection switch (100) according to any one of claims 4 to 9, further comprising:
a mounting base (7), wherein the driving mechanism (3), the stationary contact (110), and the pressing plate (4) are all disposed on the mounting base (7).

11. The high-voltage connection switch (100) according to claim 10, further comprising:
a guide assembly (71), wherein the guide assembly (71) is disposed on the mounting base (7), and the guide assembly (71) is in guiding cooperation with the pressing plate (4), so that the pressing plate (4) moves directionally along the guide assembly (71).

12. The high-voltage connection switch (100) according to claim 11, wherein the guide assembly (71) comprises:
a guide post (711), wherein the guide post (711) is disposed on the mounting base (7); and
a guide sleeve (712), wherein the guide sleeve (712) is disposed at an end of the guide post (711), and the pressing plate (4) is capable of being passed through by the guide post (711) and is configured to move directionally along the guide post (711).

13. The high-voltage connection switch (100) according to any one of claims 10 to 12, further comprising:
a first limiting assembly (72); and
a second limiting assembly (73), wherein the second limiting assembly (73) and the first limiting assembly (72) are adjustably disposed on the mounting base (7), the pressing plate (4) is disposed between the first limiting assembly (72) and the second limiting assembly (73) to move between the first limiting assembly (72) and the second limiting assembly (73) in a limited manner, the first limiting assembly (72) and the second limiting assembly (73) are externally connected to a signal circuit (10) for identifying contact and separation states between the stationary contact (110) and the movable contact assembly (120).

14. A vehicle (1000), comprising:
the high-voltage connection switch (100) according to any one of the claims 1 to 13.
